# EUROPÄISCHE PATENTSCHRIFT

(11) **EP 1 552 996 B1**
(45) Veröffentlichungstag und Bekanntmachung des Hinweises auf die Patenterteilung: **05.09.2007**
(21) Anmeldenummer: 04026793.2
(22) Anmeldetag: 11.11.2004
(51) Int. Cl.: B60T 8/32, B60T 13/68, B60T 17/00, B60T 17/02, B60T 17/18

(54) **Verfahren und Vorrichtung zum Regeln des Druckes in einem elektronisch gesteuerten Bremssystem (EBS) eines Fahrzeugs**
Method and apparatus for controlling pressure in an electronic controlled brake system (EBS) of a vehicle
Procédé et dispositif de réglage de la pression dans un système de freinage électronique (EBS) d'un véhicule

(30) Priorität: 10.01.2004 DE 102004001532
(43) Veröffentlichungstag der Anmeldung: 13.07.2005
(73) Patentinhaber: WABCO GmbH, 30453 Hannover (DE)
(72) Erfinder: Diekmeyer, Heinrich, 30890 Barsinghausen (DE); Schmidt, Reinhard, 30173 Hannover (DE)
(74) Vertreter: Günther, Constantin

(56) Entgegenhaltungen:
- FR-A- 2 839 693
- US-A- 5 592 754
- US-B1- 6 375 281
- "DAS BREMSSYSTEM EBS VON SCANIA SCANIA EBS BRAKE SYSTEM" ATZ AUTOMOBILTECHNISCHE ZEITSCHRIFT, FRANCKH'SCHE VERLAGSHANDLUNG. STUTTGART, DE, Bd. 98, Nr. 9, September 1996 (1996-09), Seiten 406-407, XP000627474 ISSN: 0001-2785

## Beschreibung

Die Erfindung betrifft ein Verfahren und eine Vorrichtung zum Regeln des Druckes in einem elektronisch gesteuerten Bremssystem (EBS) eines Fahrzeugs gemäß Oberbegriff des Anspruchs 1 und 8.

Es ist bekannt, in Fahrzeug-Bremsanlagen mit einem Druckluftversorgungsteil (Kompressor, Druckregler, Druckluftvorratsbehälter) Druckregler zu verwenden, die abhängig von der Ventil-Einstellung den in die Bremszylinder weitergeleiteten Druck auf einen fest vorgegebenen Wert begrenzen. Wenn in allen Vorratskreisen der Betriebsdruck erreicht ist, schaltet der Druckregler den Kompressor auf Leerlauf, das heißt, die vom Kompressor geförderte Druckluft wird z. B. durch den Druckregler ins Freie geblasen. Sinkt der Druck in den Vorratsbehältern durch Luftverbrauch oder Undichtigkeiten im System unter den Einschaltdruck, dann schaltet der Druckregler den Kompressor wieder auf Lastlauf und der Kompressor fördert Druckluft in das System, bis der Abschaltdruck erreicht ist.

Aus der DE 101 49 918 C1 ist eine Vorrichtung zum Regeln des Druckes in einem mit einem elektronischen Bremssystem (EBS) ausgerüsteten Fahrzeug bekannt, bei der eine Ventileinrichtung mit Magnetventilen und Relaisventilen vorgesehen ist. Die Magnetventile sind elektrisch mit einer elektronischen Steuereinheit verbunden. Steuereingänge der Relaisventile sind pneumatisch mit Magnetventilen verbunden und stehen mit Bremszylindern in Verbindung. Drucksensoren dienen zur Messung des Arbeitsdruckes der Relaisventile. Die Ventileinrichtung steht ferner mit einem Druckluftbehälter und mit einem mit dem Druckluftbehälter verbundenen Bremsventil in Verbindung. Wird im Falle einer EBS-Regelung ein einem Bremsventil zugeordnetes Bremspedal betätigt, so wird die jeweilige Pedalstellung über den im Bremsventil integrierten Bremswertgeber als elektrisches Signal an die elektronische Steuereinheit übermittelt. In Abhängigkeit von der Größe des Ausgangssignals des Bremswertgebers bzw. der Pedalstellung des Bremsventils werden Ausgangssignale der elektronischen Steuereinrichtung erzeugt, die als Ansteuersignale für die Magnetventile dienen. Auf diese Weise können den Steuereingängen der Relaisventile Steuerdrücke zugeführt werden, die von Ausgangswerten der elektronischen Steuereinrichtung abhängen. In Abhängigkeit von diesen Steuerdrücken wird dann der Arbeitsdruck und letztlich der Druck in den Bremszylindern eingestellt. Ein Steuerdruckabbau erfolgt, wenn eine entsprechende Änderung des Bremswertgebersignals vorliegt. In diesem Fall wird ein Magnetventil so umgeschaltet, dass über Außenluftverbindungen der Relaisventile die Drücke an den Steuereingängen herabgesetzt werden. Damit werden auch die Drücke in den Bremszylindern bzw. an den Arbeitsausgängen der Ventileinrichtung abgebaut.

Aus der DE 100 29 900 A1 ist ein elektronisches Bremssystem (EBS) für ein Zugfahrzeug mit Anhänger oder Auflieger bekannt, bei dem je Bremskreis ein Druckluftvorratsbehälter und ein Steuer-/Befüllungskreis zur Steuerung und Befüllung der Anhänger- oder Aufliegerbremsanlage vorgesehen ist. Ein durch eine elektronische Steuereinheit steuerbares Vierkreisschutzventil schließt ab einem bestimmten Unterdruck in dem Druckluftvorratsbehälter die Bremskreise und den Steuer-/Befüllungskreis. Über einen Bremswertgeber wird ein Signal des Fahrer-Bremswunsches an die elektronische Steuereinheit des EBS-Systems oder an eine zentrale elektronische Steuereinrichtung, je nachdem welche Einrichtung benutzt wird oder vorhanden ist, gegeben. Die elektronische Steuereinheit des EBS-Systems bzw. die zentrale elektronische Steuereinrichtung gibt Steuer-Signale über Steuerleitungen für einen Bremsvorgang an Druckregelmodule, die mit der Druckluft aus den Druckluftvorratsbehältern die Bremskreise des Zugfahrzeugs geregelt beaufschlagen. Die Bremsanlage des Anhängers wird vom Zugfahrzeug mit versorgt. Wird ein Bremsvorgang eingeleitet, wenn der Systemdruck, z.B. 10 bar Überdruck, erreicht ist, werden über die Steuersignale ein Verteiler-Regelventil so gesteuert, dass in der Druckleitung die Steuersignale als pneumatische Signale an das Druckregelmodul weitergegeben werden. Diese entnommene Druckluft wird aus den Druckluftvorratsbehältern und von einem Luftkompressor über das Mehrkreisschutzventil ergänzt. Ein Druckregler regelt den oberen Systemdruck der Betriebsbremsanlage. Wenn z.B. durch häufiges Bremsen der Systemdruck unterhalb des Schließdruckes fällt, schließt das elektronische Mehrkreisschutzventil seine Ventile und die Luftzufuhr durch den Kompressor in die Druckluftanlage für den Zugwagen und den Anhänger ist damit gering. Wenn der Druck in den Druckluftvorratsbehältern unter einen Sicherungsdruck des elektronischen Mehrkreisschutzventils fällt, werden für einen Bremsvorgang die Ventile des Mehrkreisschutzventils über Magnetschalter geöffnet und es strömt aus den Druckluftvorratsbehältern Druckluft in den Steuer- und Versorgungskreis für die Druckluftanlage des Anhängers. Wenn einer der Druckluftkreise eine z.B. defekte Leitung hat, bleibt dieser Druckluftkreis geschlossen. Das steuerbare Mehrkreisschutzventil öffnet bei einem länger andauernden Bremsvorgang für die Zeit eines einstellbaren zeitlichen Anteils dieses Bremsvorganges durch Signale von der elektronischen Steuereinheit auch unterhalb des eingestellten Schließdruckes seine Ventile intakter Bremskreise und versorgt den Steuer- und Versorgungskreis der Anhänger- oder Aufliegerbremsanlage mit Druckluft aus mindestens einem der Druckluftvorratsbehälter. Hierdurch wird vermieden, dass durch das Öffnen des Mehrkreisschutzventils die Druckluftvorratsbehälter durch einen während des längeren Bremsvorganges plötzlich auftretenden Druckverlust in einem der Bremskreise, völlig entleert werden. Durch diese Maßnahme wird erreicht, dass intakte Bremskreise weiterhin bremsbar sind und ein defekter Bremskreis nicht mehr mit Druckluft beliefert wird.

Durch die US 61 49 246 ist ein Druckluftversorgungssystem für Lastkraftwagen mit einem Luftfederungssystem und einem Bremssystem bekannt. Das Bremssystem ist für einen Betrieb bei einem niedrigeren Druck als den des Luftfederungssystems ausgelegt. Zu dem Druckluftversorgungssystem gehören mindestens ein Druckluftbehälter für die Versorgung des Bremssystems mit Druckluft. Der Druckluftbehälter ist für einen Luftdruck ausgelegt, der größer oder gleich dem im Luftfederungssystem benötigten Luftdruck ist, und ist sowohl an das Luftfederungssystem als auch an das Bremssystem angeschlossen. Ein Druckbegrenzungsventil sorgt dafür, dass die Druckluft für das Bremssystem auf einen niedrigeren Druck als für das Luftfederungssystem eingestellt wird.

In einem elektronisch gesteuerten Bremssystem (EBS) werden deren Ventile gewöhnlich, wie oben beschrieben, mit einem hohen Vorratsdruck (z.B. 12 bar) aus dem Vorratsbehälter versorgt. Diese Ventile belüften im normalen Betrieb die Bremszylinder aber nur bis zu einem niedrigeren Druck (z.B. 10 bar), bei dem die Bremszylinder nicht überlastet werden. Diese Druckbegrenzung erfolgt über eine elektronische Steuereinheit des EBS-Systems.

Bei elektronisch gesteuerten Bremsanlagen (EBS) ist wenigstens ein pneumatischer Redundanzkreis erforderlich, welcher wirksam wird, wenn die elektronische Steuerung des EBS-Systems ausfällt (Redundanzfall). Es besteht dabei die Gefahr, dass in einem solchen Redundanzfall bei einer starken Bremsung, insbesondere einer Vollbremsung, ein so hoher Druck aus dem Vorratsbehälter in die Bremszylinder ausgesteuert wird, dass die Bremszylinder überlastet werden. Um eine solche Überlastung der Bremszylinder zu vermeiden, ist es im Stand der Technik bekannt, Druckbegrenzungseinrichtungen einzusetzen, die allerdings durch die Beschaffung und Installation relativ hohe Kosten verursachen.

Aus dem Aufsatz "das Bremssystem EBS von SCANIA (SCANIA EBS Brake System) ATZ (Automobil Technische Zeitschrift) Bd. 98, Nr. 9, September 1996, S.406-407 ist ein sogenanntes Elektronisches Bremssystem (EBS) bekannt. Bei diesem werden die Bremsdrücke in den einzelnen Rädern eines Nutzfahrzeuges mittels der Betätigung eines Bremspedals eingestellt, wobei am Bremspedal ein elektronischer Wegsensor angebracht ist, dessen Signale Magnetventile zum Einstellen der einzelnen Bremsdrücke steuern. Bei dieser Steuerung werden auch andere Bedingungen, wie zum Beispiel das Fahrzeuggewicht, der Radschlupf, die Achslastverteilung, usw. berücksichtigt. Gegenüber einer konventionellen Druckluftbremsanlage ergibt sich durch das EBS ein schnelleres, komfortableres Bremsverhalten des Nutzfahrzeugs.

Schließlich ist aus der FR-A-2839693 (Renault V.I.) eine Bremsanordnung für die Achse eines Nutzfahrzeugs bekannt, bei welchem die Bremszylinder über Magnetventile aus einem Luftbehälter mit Bremsdruck beaufschlagbar sind. Der Druck im Luftbehälter ist mit einem Drucksensorabtaster abtastbar und einer Elektronik zuführbar. Die Elektronik ist mit einem ABS (AntiBlockiersystem) zur Reduzierung des Bremsdruckes bei rutschenden Reifen ausgerüstet. Falls die Elektronik erkennt, dass das ABS defekt ist, wird der Luftdruck im Luftbehälter abgesenkt auf einen Wert, der ein Blockieren der Räder verhindert.

Die Aufgabe der vorliegenden Erfindung besteht deshalb darin, ein Verfahren und eine Vorrichtung zum Regeln des Druckes in einem elektronisch gesteuerten Bremssystem (EBS) so auszubilden, dass auf Druckbegrenzungseinrichtungen verzichtet werden kann, aber dennoch im Redundanzfall eine Überlastung der Bremszylinder vermieden ist.

Diese Aufgabe wird durch das Verfahren gemäß Anspruch 1 und die Vorrichtung gemäß Anspruch 8 gelöst.

Vorteilhafte und zweckmäßige Weiterbildungen der Aufgabenlösung sind in den Unteransprüchen angegeben

Die Erfindung schlägt eine Kommunikation zwischen den Systemen "elektronisch gesteuerte Druckluftversorgung" und "elektronisches Bremssystem (EBS)" und eine Regelung des Luftdruckes für einen Druckluftvorratsbehälter durch eine elektronische Steuereinrichtung des elektronischen Bremssystems vor, um die Bremszylinder im Redundanzfall, d. h. bei Ausfall der elektronischen Steuerung des EBS-Systems oder eines Teils des Systems, vor Überlastung zu schützen, wodurch Druckbegrenzungseinrichtungen eingespart werden können. Ferner ermöglicht die Erfindung kleinere Druckbehälter mit hohem Vorratsdruck zu verwenden, was den erforderlichen Bauraum reduziert.

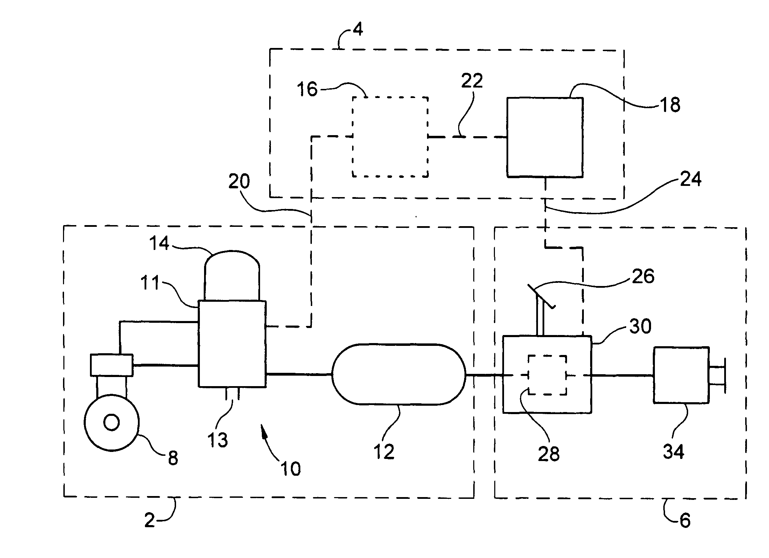

Die Erfindung soll nachfolgend anhand der beigefügten Zeichnung, die ein Blockschaltbild einer Ausführungsform einer erfindungsgemäßen Vorrichtung zum Regeln des Druckes in einem elektronisch gesteuerten Bremssystem (EBS) eines Fahrzeugs zeigt, näher erläutert werden.

Die erfindungsgemäße Vorrichtung umfasst ein Druckluftversorgungsteil 2, eine elektronische Steuereinrichtung 4 und einen durch die Steuereinrichtung gesteuerten Bremskreis 6.

Der Druckluftversorgungsteil 2 umfasst eine elektronische Druckluftversorgungseinheit 10 mit einem Kompressor 8, einem elektronischen Druckregler 11 und einer Entlüftung 13, einen Druckluftvorratsbehälter 12 und einen Lufttrockner 14.

Die elektronische Steuereinrichtung 4 umfasst eine zentrale Steuereinheit 16 und eine elektronische EBS-Steuereinheit 18, die miteinander und mit der elektronischen Druckluftversorgungseinheit bzw. dem elektronischen Druckregler 11 über CAN-Leiter 20, 22 und mit dem Bremskreis 6 über eine Daten- und Steuerleitung 24 kommunizieren, wobei vorzugsweise die zentrale Steuereinheit 16 die EBS-Steuereinheit 18 überwacht. Die elektronische EBS-Steuereinheit 18 kann in den Bremskreis 6 integriert sein.

Der Bremskreis 6 umfasst unter anderem ein Bremsventil mit einem Bremswertgeber 26, wenigstens ein mechanischpneumatisches Ventil 28 eines pneumatischen Redundanzkreises, wenigstens einen Bremsdruckmodulator 30 und wenigstens einen Bremszylinder 34.

Im Normalfall lädt der elektronische Druckluftversorgungsteil 2 den Druckluftvorratsbehälter 12 über den elektronischen Druckregler 11 auf einen vorbestimmten höheren Druck von beispielsweise 12 bar auf, der am Eingang des Bremsdruckmodulators 30 des Bremskreises 6 anliegt. Das Bremssystem ist für einen Betrieb bei einem niedrigeren Druck, beispielsweise 10 bar, als den Druck im Druckluftvorratsbehälter 12 (beispielsweise 12 bar) ausgelegt.

Im Falle einer Bremsung wird eine Fahrer-Bremsanforderung über den Bremswertgeber 26 erfasst und der elektronischen EBS-Steuereinheit 18 als elektronisches Anforderungssignal zugeführt. Die EBS-Steuereinheit 18 ermittelt unter Berücksichtigung verschiedener Einflussgrößen in Abhängigkeit vom Bremswertgeber-Anforderungssignal Solldrücke für die Bremszylinder 34 der Räder des Fahrzeugs und steuert die Bremsdruckmodulatoren 30 zur Aussteuerung dieser Solldrücke in die Bremszylinder an. Diese Solldrücke werden aus dem Druckluftvorratsbehälter 12 entnommen.

Bei einem Ausfall des EBS-Bremssystems oder eines Teils des Systems wird normalerweise der pneumatische Redundanzkreis mit dem mechanisch-pneumatischen Ventil 28 wirksam, dass dann so umgeschaltet wird, dass über dieses Ventil eine direkte Verbindung zwischen Druckluftvorratsbehälter 12 und Bremszylinder 34 hergestellt werden kann (Vollbremsung). Um eine Überlastung des Bremszylinders durch den hohen Behälterdruck dabei zu vermeiden, ist es bekannt, Druckbegrenzungseinrichtungen, beispielsweise Notbegrenzungsventile (nicht dargestellt) einzusetzen, die den Behälterdruck auf einen für den Bremszylinder zulässigen, den Bremszylinder nicht überlastenden Wert einstellen.

Die Erfindung schlägt einen anderen Lösungsweg zur Druckbegrenzung für die Bremszylinder im Redundanzfall vor, wodurch Druckbegrenzungseinrichtungen eingespart werden können. Der Ausfall des EBS-Systems wird entweder durch die EBS-Steuereinheit 18 selbst oder durch die zentrale elektronische Steuereinheit 16 erkannt. Die EBS-Steuereinheit 18 bzw. die zentrale elektronische Steuereinheit 16 steuern den elektronischen Druckregler 11 der elektronischen Druckluftversorgungseinheit 10 dann so, dass entweder ein Druckaufbau im Behälter 12 nur bis auf den für den Bremszylinder 34 zulässigen, den Bremszylinder nicht überlastenden Druckwert (beispielsweise 10 bar) erfolgt, falls der Behälterdruck niedriger ist als der Solldruck für den Bremszylinder, oder der Behälterdruck entsprechend abgesenkt wird, falls der Behälterdruck höher als der zulässige obere Bremszylinderdruck ist, beispielsweise durch Entlüften zur Atmosphäre über die Entlüftung 13. Die Kommunikation bezüglich EBS-Ausfall zwischen der EBS-Steuereinheit 18 und der zentralen elektronischen Steuereinheit 16 einerseits und zwischen der EBS-Steuereinheit 18 oder der zentralen elektronischen Steuereinheit 16 und dem elektronischen Druckversorgungsteil 2 andererseits erfolgt über die CAN-Datenleitungen 22 und 20. Durch diese Maßnahme werden bei Ausfall des EBS-Systems oder eines Teils des Systems (Redundanzfall) bei Bremsvorgängen, bei denen ohne Druckbegrenzungseinrichtungen Bremsdrücke p größer als der obere, den Bremszylinder noch nicht überlastende Druck (z. B. 10 bar < p ≤ 12 bar) in den Bremszylinder eingespeist werden können, insbesondere bei einer Vollbremsung, über das Ventil 28 niedrigere, den Bremszylinder 34 nicht überlastende Behälterdrücke p (beispielsweise p ≤ 10 bar) in den Bremszylinder ausgesteuert, also beispielsweise bei einer Vollbremsung maximal der den Bremszylinder noch nicht überlastende Druck (beispielsweise 10 bar).

Wenn die Regeneration des Lufttrockners 14 elektronisch gesteuert wird, wird gemäß der Erfindung bei Ausfall des EBS-Systems eine Zwangsregeneration durch Rückführung von Druckluft aus dem Druckluftvorratsbehälter 12 zur Absenkung des Druckes in diesem Druckluftvorratsbehälter auf den für den Bremszylinder zulässigen Druckwert durchgeführt.

Durch die beschriebene Ausbildung, die eine Kommunikation zwischen der zentralen elektronischen Steuereinheit 16 und/oder der EBS-Steuereinheit 18 und der elektronisch gesteuerten Druckluftversorgung 2 und im Falle eines Ausfalls des EBS-Systems eine Einstellung des Druckes im Druckluftvorratsbehälter 12 auf einen für die Bremszylinder zulässigen Druckwert durch eine der elektronischen Steuereinheiten 16, 18 vorsieht, können somit trotz Einsparung von Druckbegrenzungseinrichtungen Überlastungen der Bremszylinder vermieden werden. Es kann außerdem mit einem wesentlich höheren Vorratsdruck im Druckluftvorratsbehälter als der zulässige obere, den Bremszylinder noch nicht überlastende Druck gearbeitet werden, wodurch kleinere, den Bauraum reduzierende Behälter eingesetzt werden können. Bei Ausfall des EBS-Systems wird dieser hohe Vorratsdruck, wie beschrieben, auf einen Wert herabgesetzt, mit dem das Fahrzeug bei einem Bremsvorgang über das Ventil 28 des pneumatischen Redundanzkreises ohne Überlastung der Bremszylinder abgebremst werden kann.

## Patentansprüche

1. Verfahren zum Regeln des Druckes in einem elektronisch gesteuerten EBS-Bremssystem eines Fahrzeugs, bei dem
- der Bremszylinderdruck an den einzelnen Rädern mittels elektronischer Druckregelmodule (30) geregelt wird, die mit einer elektronischen Steuereinheit (4) verbunden sind,
- eine Fahrer-Bremsanforderung über einen Bremswertgeber (26) erfasst und der elektronischen Steuereinheit (4) zugeführt wird, die unter Berücksichtigung verschiedener Einflussgrößen Solldrücke für die Bremszylinder (34) der Räder ermittelt, welche von den Druckregelmodulen (30) den einzelnen Bremszylindern (34) zugesteuert werden, wobei das Druckmittel aus einem Druckmittelvorratsbehälter (12) entnommen wird, dessen Druck durch eine elektronisch gesteuerte Druckmittelversorgungseinheit (10) oder einen elektronisch gesteuerten Druckregler (11) eingestellt wird,
- beim Ausfall des EBS-Systems ein mechanischpneumatischer Redundanzkreis wirksam wird, welcher einen Redundanzdruck zur Bremsung des Fahrzeugs in die Bremszylinder (34) aussteuert, **dadurch gekennzeichnet, dass** bei Ausfall des elektronisch gesteuerten EBS-Bremssystems oder eines Teils des Systems, d. h. im Redundanzfall, der Druck im Druckmittelvorratsbehälter (12) auf einen für die Bremszylinder (34) zulässigen, die Bremszylinder (34) nicht überlastenden Wert eingestellt oder abgesenkt wird, und **dass** bei Vorhandensein eines Lufttrockners (14) mit elektronisch gesteuerter Regeneration der Druck im Druckmittelvorratsbehälter (12) durch Zwangsregeneration des Lufttrockners (14) abgesenkt wird.

2. Verfahren nach Anspruch 1, **dadurch gekennzeichnet, dass** der Druck im Druckmittelvorratsbehälter (12) bei intaktem EBS-Bremssystem höher eingestellt ist als der Druck bei Ausfall des EBS-Systems.

3. Verfahren nach Anspruch 1, **dadurch gekennzeichnet, dass** der Ausfall des EBS-Bremssystems durch die EBS-Steuereinheit (18) erkannt wird und der elektronisch gesteuerten Druckmittelversorgungseinheit (10) oder dem elektronischen Druckregler (11) signalisiert wird zur Herabsetzung oder Einstellung des Druckes im Druckmittelvorratsbehälter (12) auf einen für die Bremszylinder (34) zulässigen Wert.

4. Verfahren nach Anspruch 1 oder 3, **dadurch gekennzeichnet, dass** eine zentrale elektronische Steuereinheit (16) vorgesehen ist, die die EBS-Steuereinheit (18) überwacht, einen Ausfall des EBS-Systems erkennt und den Ausfall des EBS-Systems der elektronisch gesteuerten Druckmittelversorgungseinheit (10) oder dem elektronischen Druckregler (11) signalisiert zur Einstellung oder Herabsetzung des Druckmittelvorratsbehälterdruckes auf einen für die Bremszylinder (34) zulässigen Wert.

5. Verfahren nach Anspruch 3 oder 4, **dadurch gekennzeichnet, dass** die EBS-Steuereinheit (18) oder die zentrale elektronische Steuereinheit (16) mit der elektronisch gesteuerten Druckmittelversorgungseinheit (10) oder mit dem elektronisch gesteuerten Druckregler (11) über CAN-Datenleiter (20, 22) kommuniziert.

6. Verfahren nach Anspruch 4 oder 5, **dadurch gekennzeichnet, dass** die EBS-Steuereinrichtung (18) und die zentrale elektronische Steuereinrichtung (16) miteinander über CAN-Datenleiter (22) kommunizieren.

7. Verfahren nach einem der vorhergehenden Ansprüche, **dadurch gekennzeichnet, dass** der Druck im Druckmittelvorratsbehälter (12) auf einen höheren Wert von etwa 12 bar bei intaktem EBS-System und auf einen niedrigeren Wert von ca. 10 bar bei einem Ausfall des EBS-Systems eingestellt wird.

8. Vorrichtung zum Regeln des Druckes in einem elektronisch gesteuerten Bremssystem (EBS) eines Fahrzeugs mit
- einem elektronisch gesteuerten Druckmittelversorgungsteil (2), der eine elektronisch gesteuerte Druckmittelversorgungseinheit (10) mit einem Kompressor (8) und einem elektronisch gesteuerten Druckregler (11) und einen Druckmittelvorratsbehälter (12) aufweist, welcher vom Kompressor (8) über den Druckregler (11) auf einen vorbestimmten Druck befüllbar ist,
- einem Bremskreis (6) mit Bremszylindern (34) und Druckregelmodulen (30) zur Aussteuerung von Bremsdruck in die Bremszylinder (34),
- einem Bremswertgeber (26) zur Erfassung einer Fahrer-Bremsanforderung und Abgabe eines entsprechenden elektrischen Anforderungssignales,
- einer elektronischen Steuereinrichtung (4), die mit dem Bremswertgeber verbunden ist, unter Berücksichtigung verschiedener Einflussgrößen in Abhängigkeit vom Bremswertgeber-Anforderungssignal Solldrücke für die Bremszylinder (34) der Räder des Fahrzeugs ermittelt und die Druckregelmodule (30) zur Aussteuerung der Solldrücke in die Bremszylinder (34) ansteuert, die aus dem Druckmittelvorratsbehälter (12) entnommen werden, und
- einem mechanisch-pneumatischen Redundanzkreis (28), welcher beim Ausfall des EBS-Systems einen Redundanzdruck zur Bremsung des Fahrzeugs in die Bremszylinder (34) aussteuert,
**dadurch gekennzeichnet, dass**
die elektronisch gesteuerte Druckmittelversorgungseinheit (10) oder der elektronisch gesteuerte Druckregler (11) beim Ausfall des EBS-Systems oder eines Teils des Systems durch die elektronische Steuereinrichtung (4) ansteuerbar ist zur Einstellung bzw. Absenkung des Druckes im Druckmittelvorratsbehälter (12) auf einen für die Bremszylinder (34) zulässigen, die Bremszylinder (34) nicht überlastenden Druck, und dass bei Vorhandensein eines Lufttrockners (14) mit elektronisch gesteuerter Regeneration der Druck im Druckmittelvorratsbehälter (12) durch Zwangsregeneration des Lufttrockners (14) abgesenkt wird.

9. Vorrichtung nach Anspruch 8, **dadurch gekennzeichnet, dass** die elektronische Steuereinrichtung (4) eine elektronische EBS-Steuereinheit (18) und/oder eine zentrale elektronische Steuereinheit (16) umfasst.

10. Vorrichtung nach Anspruch 8 oder 9, **dadurch gekennzeichnet, dass** die EBS-Steuereinheit (18) und die zentrale elektronische Steuereinheit (16) miteinander und mit der elektronisch gesteuerten Druckmittelversorgungseinheit (10) oder mit dem elektronisch gesteuerten Druckregler (11) über CAN-Datenleiter (20, 22) kommunizieren.

11. Vorrichtung nach Anspruch 9, **dadurch gekennzeichnet, dass** die zentrale Steuereinheit (16) das EBS-System überwacht.

12. Vorrichtung nach Anspruch 8, **dadurch gekennzeichnet, dass** der Druck im Druckmittelvorratsbehälter (12) auf einen höheren Wert von etwa 12 bar bei intaktem EBS-System und auf einen niedrigeren Wert von etwa 10 bar bei einem Ausfall des EBS-Systems eingestellt wird.

13. Vorrichtung nach einem der Ansprüche 8 bis 12, **dadurch gekennzeichnet, dass** die elektronische EBS-Steuereinheit (18) in den Bremskreis (6) integriert ist.

## Claims

1. Process for controlling the pressure in an electronically controlled EBS braking system of a vehicle, in which
- the brake cylinder pressure at the individual wheels is controlled by means of electronic pressure control modules (30), which are connected to an electronic control unit (4),
- the driver's braking requirement is detected by way of a brake value transmitter (26) and is passed on to the electronic control unit (4), which determines desired pressures for the brake cylinders (34) of the wheels taking into account various influencing variables, which desired pressures are regulatedly supplied to the individual brake cylinders (34) by the pressure control modules (30), the pressure medium being drawn from a pressure medium storage container (12), the pressure of which is set by an electronically controlled pressure medium supply unit (10) or by an electronically controlled pressure controller (11),
- in the event of failure of the EBS system there comes into effect a mechano-pneumatic redundancy circuit which regulatedly supplies a redundancy pressure to the brake cylinders (34) in order to brake the vehicle,
**characterised in that** in the event of failure of the electronically controlled EBS braking system or of a part of the system, that is to say in the case of redundancy, the pressure in the pressure medium storage container (12) is adjusted or reduced to a value permissible for the brake cylinders (34) that will not overload the brake cylinders (34), and
**in that** when an air drier (14) having electronically controlled regeneration is present the pressure in the pressure medium storage container (12) is reduced by automatic regeneration of the air drier (14).

2. Process according to claim 1, **characterised in that** when the EBS braking system is intact the pressure in the pressure medium storage container (12) is set higher than the pressure if the EBS system fails.

3. Process according to claim 1, **characterised in that** the failure of the EBS braking system is detected by the EBS control unit (18) and is signalled to the electronically controlled pressure medium supply unit (10) or to the electronic pressure controller (11) in order to reduce or adjust the pressure in the pressure medium storage container (12) to a value that is permissible for the brake cylinders (34).

4. Process according to claim 1 or 3, **characterised in that** there is provided a central electronic control unit (16), which monitors the EBS control unit (18), detects a failure of the EBS system and signals the failure of the EBS system to the electronically controlled pressure medium supply unit (10) or to the electronic pressure controller (11) in order to adjust or reduce the pressure in the pressure medium storage container to a value permissible for the brake cylinders (34).

5. Process according to claim 3 or 4, **characterised in that** the EBS control unit (18) or the central electronic control unit (16) communicates with the electronically controlled pressure medium supply unit (10) or with the electronically controlled pressure controller (11) by way of CAN data lines (20, 22).

6. Process according to claim 4 or 5, **characterised in that** the EBS control device (18) and the central electronic control device (16) communicate with one another by way of a CAN data line (22).

7. Process according to one of the preceding claims, **characterised in that** the pressure in the pressure medium storage container (12) is adjusted to a higher value of approximately 12 bar when the EBS system is intact and to a lower value of approximately 10 bar if the EBS system fails.

8. Arrangement for controlling the pressure in an electronically controlled braking system (EBS) of a vehicle, comprising
- an electronically controlled pressure medium supply part (2) which comprises an electronically controlled pressure medium supply unit (10) having a compressor (8) and an electronically controlled pressure controller (11) and a pressure medium storage container (12) arranged to be filled to a predetermined pressure by the compressor (8) by way of the pressure controller (11),
- a brake circuit (6) comprising brake cylinders (34) and pressure control modules (30) for regulatedly supplying brake pressure to the brake cylinders (34),
- a brake value transmitter (26) for detecting the driver's braking requirement and sending a corresponding electrical requirement signal,
- an electronic control device (4) which is connected to the brake value transmitter, determines desired pressures for the brake cylinders (34) of the wheels of the vehicle taking into account various influencing variables in dependence upon the requirement signal from the brake value transmitter and causes the pressure control modules (30) to regulatedly supply the desired pressures to the brake cylinders (34), which desired pressures are drawn from the pressure medium storage container (12), and
- a mechano-pneumatic redundancy circuit (28) which regulatedly supplies a redundancy pressure to the brake cylinders (34) in order to brake the vehicle in the event of failure of the EBS system,
**characterised in that**, in the event of failure of the EBS system or of a part of the system, the electronically controlled pressure medium supply unit (10) or the electronically controlled pressure controller (11) can be caused by the electronic control device (4) to adjust or reduce the pressure in the pressure medium storage container (12) to a pressure permissible for the brake cylinders (34) that will not overload the brake cylinders (34), and **in that** when an air drier (14) having electronically controlled regeneration is present the pressure in the pressure medium storage container (12) is reduced by automatic regeneration of the air drier (14).

9. Arrangement according to claim 8, **characterised in that** the electronic control device (4) comprises an electronic EBS control unit (18) and/or a central electronic control unit (16).

10. Arrangement according to claim 8 or 9, **characterised in that** the EBS control unit (18) and the central electronic control unit (16) communicate with one another and with the electronically controlled pressure medium supply unit (10) or with the electronically controlled pressure controller (11) by way of CAN data lines (20, 22).

11. Arrangement according to claim 9, **characterised in that** the central control unit (16) monitors the EBS system.

12. Arrangement according to claim 8, **characterised in that** the pressure in the pressure medium storage container (12) is set at a higher value of approximately 12 bar when the EBS system is intact and at a lower value of approximately 10 bar in the event of failure of the EBS system.

13. Arrangement according to one of claims 8 to 12, **characterised in that** the electronic EBS control unit (18) is integrated into the brake circuit (6).

## Revendications

1. Procédé de réglage de la pression dans un système EBS à commande électronique d'un véhicule, dans lequel
- la pression du cylindre de freinage dans les roues individuelles est réglée grâce à des modules de réglage de pression électronique (30), qui sont reliés à une unité de commande électronique (4),
- une demande de freinage de la part du conducteur est détectée par un transmetteur de valeur de freinage (26) et est délivrée à l'unité de commande électronique (4), qui détermine, en tenant compte des différentes grandeurs d'influence, les pressions de consigne pour les cylindres de freinage (34) des roues, qui sont commandés par les modules de réglage de pression (30) aux cylindres individuels de freinage (34), où le moyen de pression est extrait d'un réservoir de stockage de moyen de pression (12), dont la pression est réglée par une unité d'alimentation de moyen de pression commandée électroniquement (10) ou par un régulateur de pression commandé électroniquement (11),
- en cas de défaillance du système EBS, un circuit redondant mécanique-pneumatique fonctionne, qui règle une pression redondante pour le freinage du véhicule dans les cylindres de freinage, **caractérisé en ce que**, en cas de défaillance du système EBS à commande électronique ou d'une partie du système, c'est-à-dire en cas de redondance, la pression dans le réservoir de stockage de moyen de pression (12) est réglée ou réduite à une valeur admissible pour les cylindres de freinage (34) et ne surchargeant pas les cylindres de freinage (34), et **en ce que**, dans le cas de la présence d'un dessiccateur d'air (14) avec régénération à commande électronique, la pression dans le réservoir de stockage de moyen de pression (12) est réduite par régénération forcée du dessiccateur d'air (14).

2. Procédé selon la revendication 1, **caractérisé en ce que** la pression dans le réservoir de stockage de moyen de pression (12) est réglée plus élevée dans un système de freinage EBS intact que la pression en cas de défaillance du système EBS.

3. Procédé selon la revendication 1, **caractérisé en ce que** la défaillance du système EBS est reconnue par l'unité de commande d'EBS (18) et est signalisée à l'unité d'alimentation en moyen de pression commandée électroniquement (10) ou au régulateur de pression électronique (11) pour réduire ou régler la pression dans le réservoir de stockage de moyen de pression (12) à une valeur admissible pour le cylindre de freinage (34).

4. Procédé selon la revendication 1 ou 3, **caractérisé en ce qu'**une unité de commande électronique centrale (16) est prévue, qui surveille l'unité de commande d'EBS (18), et signale la défaillance du système EBS à l'unité d'alimentation de moyen de pression à commande électronique (10) ou au régulateur de pression électronique (11) pour régler ou réduire la pression du réservoir de stockage de moyen de pression à une valeur admissible pour les cylindres de pression (34).

5. Procédé selon la revendication 3 ou 4, **caractérisé en ce que** l'unité de commande d'EBS (18) ou l'unité de commande électronique centrale (16) communique avec l'unité d'alimentation en moyen de pression à commande électronique (10) ou avec le régulateur de pression à commande électronique (11) par l'intermédiaire de conducteur de données CAN (20, 22).

6. Procédé selon la revendication 4 ou 5, **caractérisé en ce que** le dispositif de commande d'EBS (18) et le dispositif de commande électronique central (16) communiquent l'un avec l'autre par l'intermédiaire de conducteur de données CAN (22).

7. Procédé selon l'une des revendications précédentes, **caractérisé en ce que** la pression dans le réservoir de moyen de pression (12) est réglée à une valeur élevée d'environ 12 bars dans le cas d'un système EBS intact et à une valeur moindre d'environ 10 bars en cas de défaillance du système EBS.

8. Dispositif de réglage de la pression dans un système de freinage à commande électronique (EBS) d'un véhicule comportant
- une partie d'alimentation en moyen de pression commandée électroniquement (2), qui présente une unité d'alimentation en moyen de pression à commande électronique (10) avec un compresseur (8) et un régulateur de pression à commande électronique (11) et un réservoir de stockage de moyen de pression (12), qui peut être rempli à une valeur prédéterminée par le compresseur (8) par l'intermédiaire du régulateur de pression (11).
- un circuit de freinage (6) comportant les cylindres de freinage (34) et des modules de réglage de pression (30) pour commander la pression de freinage dans les cylindres de freinage (34),
- un transmetteur de valeur de freinage (26) pour détecter une demande de freinage de la part du conducteur et la délivrance d'un signal de demande électrique correspondant,
- un dispositif de commande électronique (4), qui est relié au transmetteur de valeur de freinage, détermine, en tenant compte des différentes grandeurs d'influence selon le signal de demande de transmetteur de valeur de freinage, des pressions de consigne pour les cylindres de freinage (34) des roues du véhicule et commande les modules de réglage de pression (30) pour délivrer les pressions de consigne dans les cylindres de freinage (34), qui proviennent du réservoir de stockage de moyen de pression (12), et
- un circuit redondant mécanique-pneumatique (28), qui délivre, en cas de défaillance du système EBS, une pression redondante dans les cylindres de freinage (34) pour le freinage du véhicule,
**caractérisé en ce que**
l'unité d'alimentation en moyen de pression commandée électroniquement (10) ou le régulateur de pression commandé électroniquement (11) peut être commandée, en cas de défaillance du système EBS ou d'une partie du système, par le dispositif de commande électronique (4) pour le réglage ou la réduction de la pression dans le réservoir de stockage de moyen de pression (12) à une pression admissible pour les cylindres de freinage (34) et ne surchargeant pas les cylindre de freinage (34), et
**en ce que**, dans le cas de la présence d'un dessiccateur d'air (14) avec régénération à commande électronique, la pression est réduite dans le réservoir de stockage de moyen de pression (12) par régénération forcée du dessiccateur d'air (14).

9. Dispositif selon la revendication 8, **caractérisé en ce** le dispositif électronique (4) comprend une unité de commande d'EBS électronique (18) et/ou une unité de commande électronique centrale (16).

10. Dispositif selon la revendication 8 ou 9, **caractérisé en ce que** l'unité de commande d'EBS (18) et l'unité de commande électronique centrale (16) communiquent l'une avec l'autre et avec l'unité d'alimentation en moyen de pression à commande électronique (10) ou avec le régulateur de pression à commande électronique (11) par l'intermédiaire d'un conducteur de données CAN (20, 22).

11. Dispositif selon la revendication 9, **caractérisé en ce** l'unité de commande centrale (16) surveille le système EBS.

12. Dispositif selon la revendication 8, **caractérisé en ce que** la pression dans le réservoir de stockage de moyen de pression (12) est réglée à une valeur élevée d'environ 12 bars dans le cas d'un système EBS intact et à une valeur moindre d'environ 10 bars en cas de défaillance du système EBS.

13. Dispositif selon l'une des revendications 8 à 12, **caractérisé en ce que** l'unité de commande d'EBS (18) est intégrée dans le circuit de freinage (6).
